# EUROPÄISCHE PATENTSCHRIFT

(11) **EP 3 496 963 B1**
(45) Veröffentlichungstag und Bekanntmachung des Hinweises auf die Patenterteilung: **03.06.2020**
(21) Anmeldenummer: 17740328.4
(22) Anmeldetag: 05.07.2017
(51) Int. Cl.: B60G 21/055

(54) **SCHALTBARE STABILISATORANORDNUNG EINES FAHRZEUGES**
SWITCHABLE STABILISER ASSEMBLY OF A VEHICLE
ENSEMBLE STABILISATEUR COMMUTABLE D'UN VÉHICULE

(30) Priorität: 12.08.2016 DE 102016215098
(43) Veröffentlichungstag der Anmeldung: 19.06.2019
(73) Patentinhaber: Bayerische Motoren Werke Aktiengesellschaft, 80809 München (DE)
(72) Erfinder: KRÜGER, Robert, 82178 Puchheim (DE); HÄUSLER, Stefan, 80686 München (DE)
(86) Internationale Anmeldenummer: PCT/EP2017/066733
(87) Internationale Veröffentlichungsnummer: WO 2018/028888

(56) Entgegenhaltungen:
- EP-A2- 2 481 615
- DE-A1-102004 051 601
- DE-A1-102006 051 682
- DE-A1-102009 020 249
- DE-A1-102013 000 703
- DE-A1-102015 220 173
- JP-A- S6 320 210
- JP-A- 2008 126 909

## Beschreibung

Die Erfindung betrifft eine schaltbare Stabilisatoranordnung eines Fahrzeuges nach dem Oberbegriff des Anspruchs 1. Zum Stand der Technik wird beispielshalber auf die DE 10 2006 051 682 A1 verwiesen.

Durch unterschiedliche Fahrbahnanregungen auf ein Fahrzeugrad, beispielsweise bei unebenen Fahrbahnverhältnissen, oder in Kurvenfahrten eines zweispurigen Fahrzeuges kann es zu unerwünschten Wank- und/oder Nickbewegungen des Fahrzeuges kommen. Dabei kann die Fahrsicherheit, Fahrdynamik sowie der Komfort negativ beeinflusst und verändert werden. Zur Minderung bzw. Abfederung dieser Wank- und/oder Nickbewegungen ist es aus dem Stand der Technik bekannt sogenannte Stabilisatoren, also besondere Federungssysteme, an einer oder an beiden Achsen des Fahrzeuges anzubringen. Man unterscheidet dabei zwischen drei unterschiedlichen Ausführungen von Stabilisatoren. Ein sogenannter passiver Stabilisator arbeitet nach dem Drehstabprinzip. Dabei ist ein einteilig ausgeführter Drehstab parallel zur Fahrzeugachskonstruktion angeordnet und an beiden Enden an einer Radaufhängung befestigt. Unterschiedliche Vertikalbewegungen der Räder werden durch elastisches Verformen bzw. Verdrehen dieses Drehstab-Stabilisators angeglichen. Der passive Stabilisator kann jedoch die aufgenommene kinetische Energie nur zeitweise speichern und gibt diese dann wieder ab. Die von dem System aufgenommenen Gegenkräfte können dabei nicht geregelt werden, sondern resultieren aus den Relativbewegungen, die sich je nach Fahrsituation einstellen. Passive Stabilisatoren sind somit in ihrer Dimensionierung und in ihrer Materialbeschaffenheit auf eine vorbestimmte Federrate ausgelegt, sodass sie Torsionskräfte nur in einer bestimmten Größenordnung aufnehmen und entsprechende Gegenkräfte aufbringen können. Dabei entsteht ein Konflikt zwischen Komfort, also einer gewünschten weichen Federung und Fahrdynamik und Fahrsicherheit, also einer gewünschten harten Federung. Daher sind passive Stabilisatoren insbesondere für Kraftfahrzeuge die sowohl für den Einsatz auf der Straße als auch im Gelände vorgesehen sind grundsätzlich nur bedingt geeignet.
Neben den genannten passiven Stabilisatoren existieren außerdem sogenannte aktive Stabilisatoren, welche üblicherweise zweiteilig ausgeführt sind. Dabei ist jeweils ein Ende einer Stabilisatorhälfte mit einem Fahrzeugrad bzw. einer Radaufhängung verbunden. Die beiden Stabilisatorhälften sind dann üblicherweise durch einen geeigneten Aktuator miteinander verbunden, welcher mittels einer geeigneten Ansteuerung die beiden Stabilisatorhälften aktiv gegeneinander verdreht. Im Gegensatz zu den passiven Stabilisatoren können aktive Stabilisatoren je nach Bedarf zwischen dem Fahrzeugaufbau und dem Fahrwerk Kräfte und Momente einleiten und gewünschte Stellwege erzeugen. Diese Kräfte sind dann nicht mehr die Folge von Aufbaubewegungen, sondern sind Funktionen beliebiger Variablen, wie beispielsweise einer Querbeschleunigung oder einem Wankwinkel. Durch das Aufbringen gezielter Gegenwankmomente und das dabei aktive Verdrehen des Stabilisators, beispielsweise bei Kurvenfahrten, kann der Wankwinkel reduziert und der Fahrzeugaufbau horizontiert werden. Eine Entkopplung bei Geradeausfahrt des Fahrzeuges reduziert Kopiereffekte, da keine Vertikalmomente an der Fahrzeugachse gestellt werden, wobei der Fahrkomfort wesentlich erhöht werden kann. Demnach kann der genannte Konflikt zwischen Komfort und Fahrdynamik durch aktive Stabilisatoren gelöst werden. Jedoch sind derartige aktive Systeme auf Fremdenergie (Pumpvorrichtung, Motor etc.) angewiesen, welche zusätzliche Kosten, Gewicht und Bauraumprobleme verursacht.

Darüber hinaus sind aus dem Stand der Technik auch sogenannte semiaktive Stabilisatoren bekannt, bei welchen keine Pumpvorrichtung vorgesehen ist und die Arbeitskammern eines oder mehrerer semiaktiver Aktuatoren, beispielsweise Schwenkmotoren, über aktiv gesteuerte Ventile miteinander verbunden sind. Dabei wird der Volumenstrom zwischen den Arbeitskammern über die Ventile gesteuert. Da eine Bewegung des Aktuators, beispielsweise des Rotors eines Schwenkmotors, erforderlich ist um einen Volumenstrom zwischen den Arbeitskammern zu erzeugen, welcher wiederum eine Kraft im Fahrwerksystem aufbaut um den ungewünschten Fahrzeugbewegungen entgegenzuwirken, erfolgt die Steuerung des semiaktiven Fahrwerksystems in Reaktion auf die ungewünschten Fahrzeugbewegungen. Es wird demnach nur Energie zum Ansteuern der Ventile benötigt. Im Gegensatz zu einem aktiven Stabilisator werden bei einem semiaktiven Stabilisator jedoch keine Kräfte aktiv gestellt, sondern abhängig von der Ventilstellung (also unter Schaltung von zwei Kennlinien) und ausschließlich in Reaktion auf die Wank- und/oder Nickbewegungen des Fahrzeuges eine Federung erzeugt. Die genannte Schrift DE 10 2006 051 682 A1 beschreibt beispielsweise eine semiaktive Verbundlenkerachse mit einer Stabilisatorfunktion, bei welcher elastisch verformbare Hohlkörper die Arbeitskammern eines Aktuators bilden. Dabei sind die Hohlkörper verbindende Ausgleichsleitungen angeordnet, über welche ein Fluid jeweils von einer eingedrückten Hohlkammer in die jeweils andere Kammer eines Hohlkammerpaares übertreten kann. Über den Durchfluss eines Ventils lässt sich somit der Fluidaustausch und folglich die Steifigkeit der Hydraulik-Drehkupplung variieren. Die DE 10 2004 051 601 A1 offenbart die Merkmale des Oberbegriffs des Anspruchs 1.

Es ist Aufgabe dieser Erfindung, einen weiteren semiaktiven Stabilisator aufzuzeigen, welcher auf unterschiedliche Federraten geschaltet werden kann, ohne die Notwenigkeit einer kostspieligen Pumpvorrichtung oder eines Motors.

Die Lösung der Aufgabe ergibt sich durch eine schaltbare Stabilisatoranordnung eines Fahrzeuges mit den Merkmalen des Anspruchs 1. Vorteilhafte Aus- und Weiterbildungen sind Inhalt der Unteransprüche.

Dabei wird eine schaltbare Stabilisatoranordnung eines Fahrzeuges insbesondere zur Wankstabilisierung vorgeschlagen. Der Stabilisator umfasst dabei eine erste und eine zweite jeweils mit einem Rad des Fahrzeuges gekoppelte Stabilisatorhälfte. Mittels einem geeigneten hydraulischen semiaktiven Aktuator sind die erste und die zweite Stabilisatorhälfte gegeneinander um deren Längsachse verdrehbar gekoppelt. Der hydraulische Aktuator selbst weist mindestens zwei mit einem Hydraulikfluid befüllte Arbeitskammern auf, wobei mindestens eine fluidleitende Verbindung zwischen den genannten Arbeitskammern angeordnet ist. Die fluidleitende Verbindung ist in ihrem Durchtrittquerschnitt aktiv veränderbar. Erfindungsgemäß sind die genannten Arbeitskammern ihrerseits nicht elastisch verformbar, stattdessen ist in den mindestens zwei Arbeitskammern des Aktuators und/oder in mindestens zwei weiteren Arbeitskammern des Aktuators ein Federelement angeordnet, welches zwischen einem Rotor und einem Stator des Aktuators abgestützt ist.
Bevorzugt sind dabei die erste Stabilisatorhälfte mit dem Rotor des Aktuators und die zweite Stabilisatorhälfte mit dem Stator des Aktuators drehfest verbunden.

Die Begrifflichkeit "semiaktiv" bedeutet im Sinne der Erfindung, dass ausschließlich für die Veränderung des Durchtrittsquerschnitts der genannten fluidleitenden Verbindung zwischen den Arbeitskammern eine externe Energiezuführung notwendig ist. Zur Bewegung des Aktuators, also zur Bewegung des Rotors gegenüber dem Stator des Aktuators, wird im Gegensatz zu dem bereits beschriebenen aktiven Stabilisator keine externe Energiezuführung benötigt.
In einer bevorzugten Ausführung der Erfindung ist der Aktuator als hydraulischer Schwenkmotor ausgeführt. Wie bereits genannt ist der Unterschied zu einem aus dem Stand der Technik bekannten Schwenkmotor, dass dieser in diesem Falle keine Energiezufuhr zur Bewegungsausführung benötigt, sondern nur, wie im folgendem näher beschrieben wird, die Schaltung bzw. die Veränderung des Durchtrittsquerschnitts der fluidleitenden Verbindung. Dabei wird bevorzugt eine Stabilisatorhälfte mit dem Schwenkmotor-Rotor und die andere Stabilisatorhälfte mit dem Schwenkmotor-Stator jeweils drehfest verbunden. Der Schwenkmotor kann dabei mindestens zwei mit einem Hydraulikmedium befüllte Arbeitskammern aufweisen, welche über eine genannte fluidleitende Verbindung miteinander verbunden sind. Durch eine aktive Veränderung des Durchtrittsquerschnitts der Verbindung und der damit einhergehenden veränderbaren oder einstellbaren Drosselwirkung des Hydraulikmediums können mindestens zwei unterschiedliche Federkennlinien des Stabilisators geschalten werden.

Die zwei jeweils durch eine fluidleitende Verbindung verbundenen Arbeitskammern innerhalb des Aktuators werden aufgrund der Notwenigkeit Ihrer Verbindung zur Funktionsfähigkeit des Aktuators bzw. zur Funktionsfähigkeit des schaltbaren semiaktiven Stabilisators im Folgenden als ein Arbeitskammer-Paar bezeichnet.

Bevorzugt ist die fluidleitende Verbindung zwischen den jeweiligen Arbeitskammer-Paaren in Form einer Leitung oder eines Kanals ausgeführt.
Dabei kann die Veränderung des Durchtrittsquerschnitts der fluidleitenden Verbindung mittels eines Stellglieds, beispielsweise eines Ventils oder eines Schiebers, eines Öffners oder Schließers oder mittels einer Drossel realisiert werden. Das Stellglied kann die fluidleitende Verbindung komplett trennen, komplett öffnen oder auch nur den Durchtrittsquerschnitt verringern ohne eine komplette Trennung der Verbindung zu veranlassen. Je nach Geschwindigkeit des einströmenden Hydraulikmediums in die fluidleitende Verbindung bei einer Bewegung des Rotors, kann durch eine nur teilweise Schließung der Verbindung eine unterschiedliche Drosselwirkungen und damit gleichzeitig eine zusätzliche Dämpfung erreicht werden.
Die Veränderung des Durchtrittquerschnitts, beispielsweise mittels eines Stellglieds, geschieht dabei durch eine aktive Ansteuerung. Außer zu dieser aktiven Ansteuerung ist zur Durchführung der erfindungsgemäßen schaltbaren Stabilitätsfunktion keine weitere externe Energiezufuhr notwendig.

Die erfindungsgemäßen Federelemente können beispielsweise in zwei weiteren Arbeitskammern, also zusätzlich zu dem bereits vorhandenen mit einem Hydraulikmedium befüllten Arbeitskammer-Paar, angeordnet sein. Das zusätzliche Arbeitskammer-Paar, in welchen die Federelemente zwischen dem Rotor und dem Stator des Aktuators abgestützt sind, kann außerdem, je nach gewünschter Dämpfung bzw. Federung, mit einem Hydraulikmedium befüllt sein. Zur Funktionsfähigkeit der zuletzt genannten Ausführung sind jedoch wieder eine fluidleitende Verbindung sowie eine Maßnahme zur Veränderung des Durchtrittsquerschnitts dieser Verbindung zwischen den beiden zusätzlichen Arbeitskammern bevorzugt.
Genauso ist es jedoch auch denkbar, die erfindungsgemäßen Federelemente in das bereits vorhandene Arbeitskammer-Paar anzuordnen.

Die Federelemente selbst sind wie bereits genannt zwischen dem Stator und dem Rotor des Aktuators in zwei Arbeitskammern abgestützt und können beispielsweise in Form einer Schraubenfeder, eines elastisch verformbaren Elastomers oder Kunststoffs, einer Torsionsfeder, eines Metallgewebes, eines Kunststoffschaums oder eines Gases ausgeführt sein. Allgemein sind alle möglichen Materialien, Ausführungen und Aggregatszustände des Federelements denkbar, sofern dieses ein nennenswert kompressibles Element darstellt.

Die beiden Stabilisatorhälften bleiben durch die erfindungsgemäße Ausführung ständig zumindest minimal miteinander gekoppelt. Dabei herrscht ein definierter maximaler Verdrehwinkel der beiden Stabilisatorhälften gegeneinander, welcher durch eine definierte Anzahl von Anschlägen bzw. die gewählte Anzahl von fluidbefüllten Arbeitskammern bzw. Arbeitskammer-Paaren gekennzeichnet ist. Hierzu stützt sich das Federelement torsional zwischen der ersten Stabilisatorhälfte, also zwischen dem Rotor des Aktuators, und der zweiten Stabilisatorhälfte, also dem Stator des Aktuators, welcher den oben genannten Anschlag darstellt bzw. umfasst, ab. Zwischen den Anschlägen kann eine gewünschte Kraft-Weg-Kennlinie mittels der Federelemente eingestellt werden. Je nach gewünschter Kraft-Weg-Kennlinie bzw. Torsionssteifigkeit des Stabilisators kann also ein Federelement mit geeigneter Federrate gewählt werden.
Ist also die Verbindung der fluidbefüllten Arbeitskammern innerhalb des Aktuators hergestellt bzw. veranlasst das Stellglied zur Veränderung des Durchtrittsquerschnitts einen Austausch des Hydraulikmediums durch die Verbindung, so modellieren die Federelemente die gewünschte Torsionssteifigkeit des Stabilisators gemäß des gewünschten Kraft-Weg-Verlaufs. Der Stabilisator ist dabei bei einem maximal möglichen Durchtrittsquerschnitt des Hydraulikmediums in der Verbindung am weichsten bzw. am wenigsten steif ausgeführt. Die Kraft-Weg-Kennlinie hängt beim geöffneten Zustand des Stellglieds also von der Federrate der Federelemente und letztlich auch von der materialbedingten Grundsteifigkeit der einzelnen Stabilisatorhälften ab. Für erstere lassen sich verschiedene Kraft-Weg-Verläufe realisieren, beispielsweise kann so ein progressiver Verlauf gewählt werden. Die beiden Stabilisatorhälften sind quasi in einem geöffneten Zustand der fluidleitenden Verbindung minimal bzw. geringfügig gekoppelt, sodass beispielsweise bei Geradeausfahrt und bestehenden Fahrbahnunebenheiten ein hoher Fahrkomfort gewährleistet werden kann.

Ist die fluidleitende Verbindung zwischen den Arbeitskammern dagegen geblockt, beispielsweise durch einen Schließer oder ein geschlossenes Ventil, so können die beiden Arbeitskammern nicht mehr frei mittels des Hydraulikmediums kommunizieren bzw. es besteht kein Fluidfluss zwischen den Arbeitskammern und die beiden Stabilisatorhälften sind maximal gekoppelt. Dadurch entsteht ein, wie bereits erläuterter, passiver Stabilisator. Dieser weist einen Kraft-Weg-Verlauf eines konventionellen, einteiligen Stabilisators nach dem Drehstabprinzip auf. In diesem maximal gekoppeltem Zustand wirkt der Stabilisator am härtesten bzw. am steifsten.

Die beiden zuletzt genannten Zustände beschreiben jeweils die Situation der Torsionssteifigkeit des Stabilisators bei maximalem Durchtrittsquerschnitt also bei einem komplett geöffneten Stellglied und bei einer Blockade der Verbindung also bei einem komplett geschlossenen Stellglied. Jedoch ist es auch möglich, wie bereits erläutert, den Durchtrittsquerschnitt der fluidleitenden Verbindung zwischen den Arbeitskammern zu verringern, jedoch nicht komplett zu schließen. Diese Zwischenstellungen des Stellglieds können dem geschwindigkeitsabhängigen Kraft-Weg-Verlauf dienen. Denn je nach äußerer Stoßanregung bzw. Radbewegung fließt das Hydraulikmedium mit unterschiedlicher Geschwindigkeit von einer Arbeitskammer über die fluidleitende Verbindung in die andere Arbeitskammer. Durch geeignete Engstellung oder Erweiterung des Durchtrittsquerschnitts können so unterschiedliche Drosselwirkungen und damit ein unterschiedlicher Kraft-Weg-Verlauf eingestellt werden.

Als Hydraulikmedium bzw. dem genannten Fluid, mit welchem die jeweiligen Arbeitskammern befüllt sind, kann beispielsweise ein Öl bzw. eine Hydraulikflüssigkeit verwendet werden.

Durch die genannte erfindungsgemäße Anordnung von Federelementen innerhalb der Arbeitskammern im Aktuator, kann vorteilhaft eine schaltbare, semiaktive Stabilisatoranordnung realisiert werden, ohne dass bauraumeinnehmende, kostspielige und schwere Zusatzeinrichtungen benötigt werden.

In einer bevorzugten Ausführung der erfindungsgemäßen Technologie, ist mindestens ein weiterer zweiter Aktuator entlang der Stabilisatorlängsachse betrachtet in Reihe mit dem bereits beschriebenen ersten Aktuator geschaltet. Geometrisch betrachtet ist dieser zweite Aktuator wie der erste Aktuator ausgebildet. So umfasst dieser ebenfalls einen Rotor, einen Stator und mindestens zwei mit einem Hydraulikmedium befüllten Arbeitskammern, die durch eine fluidleitende Verbindung miteinander verbunden sind. Die fluidleitende Verbindung ist ebenfalls in ihrem Durchtrittsquerschnitt veränderbar. Ebenfalls ist der genannte zweite Aktuator mit einer Anordnung von Federelementen ausgebildet. Der einzige Unterschied zum ersten Aktuator ist eine mögliche unterschiedliche Anordnung oder Anzahl der Federelemente innerhalb des Aktuators, sowie beispielsweise eine (gezielt) anders einstellbare Federrate bzw. Steifigkeit der Federelemente.

Darüber hinaus ist in einer weiteren bevorzugten Ausführung der Erfindung ein dritter bzw. ein weiterer Aktuator in Reihe mit dem bereits beschriebenen ersten oder zweiten oder mit den beiden bereits beschriebenen Aktuatoren geschaltet. Der genannte dritte Aktuator unterscheidet sich von den anderen beiden bereits genannten Aktuatoren insofern, dass dieser keine Federelemente umfasst. Im Falle einer solchen Ausführung mit drei Aktuatoren kann das Gehäuse, also der Stator, von zwei nebeneinanderliegenden Aktuatoren fest verbunden sein bzw. ein gemeinsames Bauteil sein. Der Rotor des äußeren Aktuators dieser beiden kann dabei die erste Stabilisatorhälfte darstellen, während der Rotor des (in diesem Falle) mittleren Aktuators fest mit dem Gehäuse (beispielsweise in Form einer Welle) des dritten Aktuators verbunden ist. Somit wird das Gehäuse des dritten Aktuators quasi zum Rotor dieses. Die zweite Stabilisatorhälfte ist dann innerhalb des dritten Aktuators angeordnet.

Bei der Verwendung von beispielsweise zwei in Reihe geschalteten Aktuatoren, ist jeweils eine Stabilisatorhälfte bevorzugt mit dem Rotor einer der beiden Aktuatoren drehfest verbunden. Die beiden Aktuatoren umfassen dabei bevorzugt ein gemeinsames Gehäuse, welches seinerseits die Statoren bzw. die Anschläge umfasst. Das Gehäuse bzw. der Stator ist mit keiner Stabilisatorhälfte fest verbunden.

Die Anzahl der entlang der Stabilisatorlängsachse in Reihe geschalteten Aktuatoren sei mit der genannten Ausführung keinesfalls auf drei Aktuatoren beschränkt. Außerdem ist es keinesfalls vorgesehen, dass beispielsweise der in dieser Beschreibung als "dritter" Aktuator bezeichnete, also jener ohne Federelement, auch quantitativ betrachtet der dritte sein muss. So kann dieser genauso in einer Ausführung mit nur zwei Aktuatoren eingesetzt werden. Das gleiche gilt für den ersten und den zweiten Aktuator.

Sinn der Hintereinanderschaltung bzw. Reihenschaltung der einzelnen Aktuatoren entlang der Stabilisatorlängsachse ist, durch geeignete Schaltung bzw. Umschaltung zwischen den Aktuatoren unterschiedliche Kraft-Weg-Kennlinien bzw. unterschiedliche Stabilisatorsteifigkeiten einstellen bzw. schalten zu können. Je nach dem bei welchen der in Reihe geschalteten Aktuatoren die jeweilige fluidleitende Verbindung oder mehrere Verbindungen oder alle Verbindungen hergestellt ist bzw. sind, besitzt der Stabilisator die Kraft-Weg-Kennlinie bzw. Federrate des sich dabei in Nutzung befindlichen Aktuators. Bei den anderen Aktuatoren ist dann folglich die fluidleitende Verbindung zwischen den Arbeitskammern blockiert, weshalb diese im Sinne dieser Erfindung nicht genutzt werden bzw. eine rein passive Stabilisatorwirkung darstellen.

Durch die beschriebene Reihenschaltung mehrerer Aktuatoren entlang der Stabilisatorlängsachse, von denen mindestens einer der Aktuatoren eine erfindungsgemäße Anordnung von Federelementen umfasst, können angepasst an die jeweils bestehende Fahrsituation unterschiedliche Stabilisatorsteifigkeiten bzw. Torsionssteifigkeiten geschaltet werden.
So können die unterschiedlichen Schaltstellungen der Aktuatoren (also ob sie genutzt werden oder nicht) jeweils auf einen bestimmten Fahrmodi abgestimmt sein. Bei zwei in Reihe geschalteten Aktuatoren sind dann beispielsweise drei Fahrmodi möglich. Wenn dabei einer der in Reihe geschalteten Aktuatoren die erfindungsgemäßen Federelemente und der andere keine dieser Federelemente umfasst, sind folgende drei Fahrmodi schaltbar:
Der erste Fahrmodus in welchen der Stabilisator geschaltet werden kann ist ein sogenannter "Sportmodus". Dabei ist keine der fluidleitenden Verbindungen in den beiden Aktuatoren hergestellt. So ist beispielsweise das Stellglied zur Veränderung des Durchtrittsquerschnitts der fluidleitenden Verbindung in jedem Aktuator in einer geschlossenen Stellung. Durch eine derartige Anordnung ist der dabei entstehende passive Stabilisator in seiner härtesten bzw. steifsten Form ausgebildet. Insbesondere in Kurvenfahrten, beispielsweise zur Steigerung der Fahrdynamik, ist eine derartige Schaltstellung der Aktuatoren hilfreich.

Der zweite einstellbare Fahrmodus ist ein Komfortmodus. Dabei ist mindestens eine fluidleitende Verbindung zwischen zwei Arbeitskammern in dem Aktuator, welcher die erfindungsgemäßen Federelemente umfasst, hergestellt. In dem Aktuator ohne Federelemente ist keine fluidleitende Verbindung der Arbeitskammern zueinander hergestellt. So wird die Kraft-Weg-Kennlinie des ersten Aktuators (also derjenige mit Federelementen) am Stabilisator eingestellt, welche durch die vorhandene fluidleitende Verbindung zwischen den Arbeitskammern und den erfindungsgemäßen Federelementen eine weichere bzw. weniger steife Stabilisatorausführung bewirkt. Eine weiche Stabilisatorausführung bedeutet, dass eine minimale Kopplung der beiden Stabilisatorhälften zueinander besteht und sich die beiden Stabilisatorhälften unabhängiger (als bei einer harten Stellung des Stabilisators) bzw. mit viel Spielraum gegeneinander bewegen können. Dieser Fahrmodus ist beispielsweise bei einer gewünschten komfortablen (Geradeaus-)Fahrt auf der Autobahn sinnvoll.

Der dritte schaltbare Fahrmodus (bei der genannten Reihenschaltung von zwei Aktuatoren) ist ein Geländemodus. Dazu ist es sinnvoll die beiden Stabilisatorhälften so weit wie möglich voneinander zu entkoppeln. Dabei kann der Aktuator, welcher keine Federelemente aufweist geschaltet bzw. die fluidleitende Verbindung in diesem Aktuator hergestellt werden. Der erste Aktuator, welcher die erfindungsgemäßen Federelemente umfasst, ist dann nicht geschaltet (also das jeweilige Stellelement zur Veränderung des Durchtrittsquerschnitts ist in einem geschlossenen Zustand). Bei einer Geländefahrt mit unterschiedlich starken Bodenunebenheiten ist dieser Modus eine sinnvolle Variante.

Die genannte Schaltung der jeweilig gewünschten Aktuatoren durch das Öffnen bzw. das Herstellen der fluidleitenden Verbindung der Arbeitskammern eines Aktuators geschieht, wie bereits genannt, aktiv.
Bevorzugt ist dabei ein den Durchtrittsquerschnitt der Verbindung veränderndes Stellglied mindestens eines Aktuators mit einer Steuereinheit gekoppelt. Dieses Stellglied, welches bevorzugt ein Ventil darstellt, ist in Abhängigkeit von Randbedingungen offen, geschlossen oder teilweise geschlossen.
Eine mögliche Randbedingung kann beispielsweise die Querbeschleunigung des Fahrzeuges, ein Höhenstand des Rades, ein Lenkwinkel, ein Wankwinkel, eine Information im Navigationssystem und vieles mehr darstellen.

So kann die Steuereinheit beispielsweise bei Erfassen einer kurvigen Fahrt durch ein sich ständig ändernder Lenkwinkel veranlassen, dass die Stabilisatoranordnung auf den Sportmodus geschaltet wird. Ist andererseits beispielsweise aus der Information des Navigationssystems zu erkennen dass das Fahrzeug über längere Zeit überwiegend in einer Geradeausfahrt betrieben wird, so kann die Stabilisatoreinstellung in den Komfortmodus geschaltet werden. In einer besonders bevorzugten Ausführung der Erfindung ist die genannte Steuereinheit als Regeleinheit ausgeführt.
In einer weiteren bevorzugten Ausgestaltung der Erfindung ist das genannte Stellglied mindestens eines Aktuators, bevorzugt die Stellglieder aller vorhandener Aktuatoren, mit einer externen Betätigungsvorrichtung gekoppelt. Das Stellglied (vorzugsweise ein Ventil) ist dann in Abhängigkeit einer Betätigung der externen Betätigungsvorrichtung offen, geschlossen oder teilweise geschlossen. Beispielsweise kann eine solche Betätigungsvorrichtung ein sogenannter Fahrerlebnisschalter sein, an welchem der Fahrer selbst den von ihm gewünschten Fahrmodus wählen kann. Hat der Fahrer so beispielsweise eine Geländefahrt geplant bzw. befindet sich der Fahrer auf unebenen und holprigen Gelände, so kann er mittels der manuellen Einstellung auf den Geländemodus die zumindest annähernd entkoppelte Stabilisatoreinstellung schalten. Genauso kann der Fahrer bei Geradeausfahrt auf beispielsweise einer Autobahn und bei gewünschter komfortabler Fahrt den Fahrmodus und damit die Stabilisatoranordnung in den Komfortmodus schalten. Bevorzugt der Fahrer eine dynamische Fahrt mit beispielsweise Kurvenabschnitten, so kann er in den Sportmodus umschalten.
Dabei wird je nach Wahl des Fahrmodus vom Fahrer das jeweilige Stellglied (bevorzugt ein Ventil) zur Veränderung des Durchtrittquerschnitts der geeigneten fluidleitenden Verbindung betätigt bzw. geschaltet. Die Betätigung des Stellglieds geschieht dabei bevorzugt elektrisch bzw. durch eine elektrische Ansteuerung.

In einer vorteilhaften Ausführung der erfindungsgemäßen Technologie ist das genannte Stellglied in einem unbestromten Zustand geschlossen. Alternativ bzw. je nach Auslegung der jeweiligen Aktuatoren kann das genannte Stellglied ebenso in einem unbestromten Zustand geöffnet sein. Wichtig dabei ist lediglich, dass bei Ausfall der jeweiligen Steuereinheit bzw. Regeleinheit bzw. Betätigungsvorrichtung zur Schaltung der jeweiligen Stellglieder, die Stabilisatoranordnung gemäß eines Fail-Safe-Prinzips in einem Modus bzw. in eine Position geschalten wird, welche eine ausreichende Sicherheit in allen Fahrsituationen bzw. bei jedem Fahrmanöver gewährleistet. Ist also keine Bestromung und damit keine Betätigung der Stellglieder aus unterschiedlichen Gründen möglich, so ist es bevorzugt, dass das Stellglied eine vorgegebene Position einnimmt. Hierzu kann das Stellglied beispielsweise in Form eines Magnetventils ausgeführt sein, sodass das Ventil bei Stromausfall bzw. in einem unbestromten Zustand entweder automatisch in eine geöffnete oder geschlossene Stellung springt bzw. versetzt wird. Alternativ kann ebenso ein Servoventil als Drossel verwendet werden.
Ist es gemäß Anspruch 7 vorgesehen, dass die Stellglieder in einem unbestromten Zustand geschlossen sind, so befindet sich die Stabilisatoranordnung in dem beschriebenen Sportmodus und damit in einer vergleichsweise harten bzw. steifen Einstellung. Dabei kann (zwar unter Vernachlässigung des Fahrkomforts) zumindest eine ausreichende Fahrsicherheit gewährleistet werden.

Ebenfalls ist es bevorzugt vorgesehen, dass das Stellglied nur dann von dem quasi entkoppelten Zustand der beiden Stabilisatorhälften in einen gekoppelten Zustand dieser schaltet, wenn sich die beiden Stabilisatorhälften in Null-Lage befinden. In Null-Lage bedeutet, dass keine der beiden Stabilisatorhälften eingefedert bzw. verdreht sind und sich beide damit in einer Neutralposition bzw. Konstruktionslage befinden. Zur genauen Lagebestimmung der beiden Stabilisatorhälften können beispielsweise Höhenstandsensoren eingesetzt werden. Genauso ist es denkbar die Null-Lage der Stabilisatorhälften durch einen geeigneten Sensor zu bestimmen. Beispielsweise kann hierzu ein Magnetschalter zum Einsatz kommen, welcher quasi an der Stelle im Aktuator angebracht ist, an welcher sich der Rotor in Null-Lage befindet. Nach erfolgtem Befehl das Stellglied zu schalten, wird dieses erst dann auch praktisch geschaltet, wenn der Rotor die Magnetschaltung passiert. So kann sichergestellt werden, dass die Schaltung des Stellgliedes tatsächlich erst bei Null-Lage der Stabilisatorhälften durchgeführt wird. Ebenso ist es denkbar beispielsweise ein Winkelsensor zur Lagebestimmung der Stabilisatorhälften einzusetzen.

In einer nächsten bevorzugten Ausführung der Erfindung umfasst mindestens ein Aktuator zwischen mindestens zwei Arbeitskammern dieses Aktuators eine zweite fluidleitende Verbindung. Eine derartige zusätzliche Verbindung quasi als Bypass oder Überströmelement ist, in Nulllage des Stabilisators bzw. in Konstuktionslage bzw. im unbelasteten Zustand des Stabilisators betrachtet, in direkter Rotornähe an den Arbeitskammern angeordnet. Sie ermöglicht bei hochfrequenten Einträgen mit kleinen Amplituden, wie sie üblicherweise bei Schlechtwegstrecken auftreten, auch in der steifen Schaltung bzw. Stellung (also bei nicht hergestellter fluidleitender Verbindung) einen definierten Drehwinkel des Rotors und somit einen verbesserten Abrollkomfort bzw. Restkomfort. Derartige zusätzliche Verbindungen können beispielsweise in Form eines zusätzlichen Kanals oder einer Aussparung im Stator ausgeführt sein.
Auch eine genannte zweite fluidleitende Verbindung, quasi als Bypass, kann ein den Durchtrittsquerschnitt veränderndes Stellglied umfassen, welches mit einer Steuereinheit gekoppelt ist und in Abhängigkeit von Randbedingungen offen, geschlossen oder teilweise geschlossen ist. So kann beispielsweise in der zweiten fluidleidenden Verbindung mindestens eines Aktuator ein Ventil vorgesehen sein, welches ansteuerbar bzw. schaltbar ist.

Im Folgenden wird die Erfindung anhand von vier Ausführungsbeispielen weiter erläutert. Erfindungswesentlich können dabei sämtliche näher beschriebenen Merkmale sein.

In Figur 1 und Figur 2 ist dabei jeweils eine schematische Darstellung der erfindungsgemäßen Konstruktion in einem Querschnitt eines Aktautors aufgezeigt.
Figur 3, Figur 4 und Figur 5 zeigen eine schematische dreidimensionale Ansicht von erfindungsgemäßen Stabilisatoranordnungen.
Figur 6 und Figur 7 zeigen zwei Ausführungsformen einer zweiten fluidleitenden Verbindung in einem Querschnitt des Aktuators.

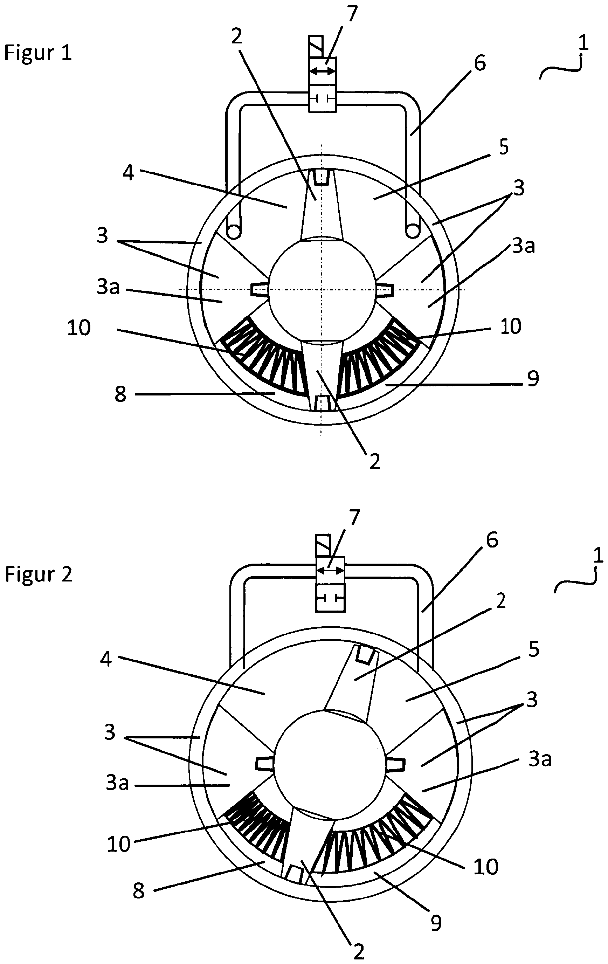

**Figur 1** zeigt einen Querschnitt durch einen hydraulisch semiaktiven Aktuator einer erfindungsgemäßen Stabilisatoranordnung. Dieser Aktuator 1 koppelt eine nicht aufgezeigte erste mit einer ebenso nicht aufgezeigten zweiten Stabilisatorhälfte gegeneinander verdrehbar um deren Längsachse. Die erste Stabilisatorhälfte ist dabei mit einem Rotor 2 des Aktuators 1 und die zweite Stabilisatorhälfte mit einem Stator 3 des Aktuators 1 drehfest verbunden. Der hydraulische Aktuator 1 selbst weist zwei mit einem Hydraulikfluid befüllte Arbeitskammern 4, 5 auf, wobei eine fluidleitende Verbindung 6 zwischen den genannten Arbeitskammern 4, 5 angeordnet ist. Die fluidleitende Verbindung 6 ist in ihrem Durchtrittsquerschnitt mittels eines Ventils 7 aktiv veränderbar.
Erfindungsgemäß sind die genannten Arbeitskammern 4, 5 ihrerseits nicht elastisch verformbar, stattdessen ist in zwei weiteren Arbeitskammern 8, 9 des Aktuators 1 jeweils ein Federelement 10 angeordnet, welches zwischen dem Rotor 2 und dem Stator 3 des Aktuators 1 abgestützt ist. Der Aktuator bzw. der Stabilisator befindet sich in **Figur 1** in einer unbelasteten Lage bzw. in der Nulllage, in welcher die beiden Stabilisatorhälften nicht gegeneinander verdreht sind. Das Ventil 7 kann zwischen einem geöffnetem, geschlossenem sowie einer Zwischenstellung gestellt werden. Bei geöffnetem Ventil 7 kann das Hydraulikmedium in den Arbeitskammern 4, 5 überfließen. Der maximale Verdrehwinkel der beiden Stabilisatorhälften bzw. zwischen Rotor 2 und Stator 3 ist durch die Anzahl der vom Stator 3 gebildeten Anschläge 3a abhängig. Durch die erfindungsgemäßen Federelemente 10, welche sich jeweils am Rotor 2 und Stator 3 abstützen, kann die Kraft-Weg-Kennlinie bzw. die Federrate des Stabilisators (bei offenem Ventil) eingestellt werden. Da in **Figur 1** das Ventil 7 geschlossen ist, findet kein Austausch von Hydraulikmedium zwischen den beiden Arbeitskammern 4, 5 statt. Die beiden Stabilisatorhälften sind dabei maximal miteinander gekoppelt und der Stabilisator wirkt damit wie ein herkömmlicher Drehstab. Dieser weist den Kraft-Weg-Verlauf eines herkömmlichen einteiligen Stabilisators auf. Ist demnach das Ventil geschlossen, befindet sich der Stabilisator in einem Sportmodus. Der Sportmodus ist insbesondere bei gewünschter dynamischer und agiler Fahrt beispielsweise in Kurvenfahrten sinnvoll.
Wird das Ventil 7, wie in **Figur 2** dargestellt, geöffnet, so ist ein Austausch von Hydraulikmedium von einer Arbeitskammer 5 in die andere Arbeitskammer 4 (und selbstverständlich andersherum) möglich. Belastungsabhängig verdreht sich somit, aufgrund des Überströmens des Hydraulikmediums von einer der Arbeitskammern 4, 5 in die andere, die eine Stabilisatorhälfte bzw. der Rotor 2 relativ zur anderen Stabilisatorhälfte bzw. zum Stator 3. Wie hoch die dabei herrschende Torsionssteifigkeit ist wird von der Federrate der Federelemente 10 bestimmt. Bei geöffnetem Ventil 7 ist somit der Stabilisator weicher eingestellt d.h. die beiden Stabilisatorhälften können sich einfacher gegeneinander verdrehen, als bei geschlossenem Ventil 7. Um die gewünschte Kraft-Weg-Kennlinie des Stabilisators bei geöffnetem Ventil 7 zu erreichen, werden die Federelemente in ihrem Material und ihrer Geometrie dementsprechend gestaltet.
So kann auf einfache Weise eine schaltbare semiaktive Stabilisatoranordnung aufgezeigt werden, bei welcher weder eine externe Pumpvorrichtung noch ein Motor benötigt wird.

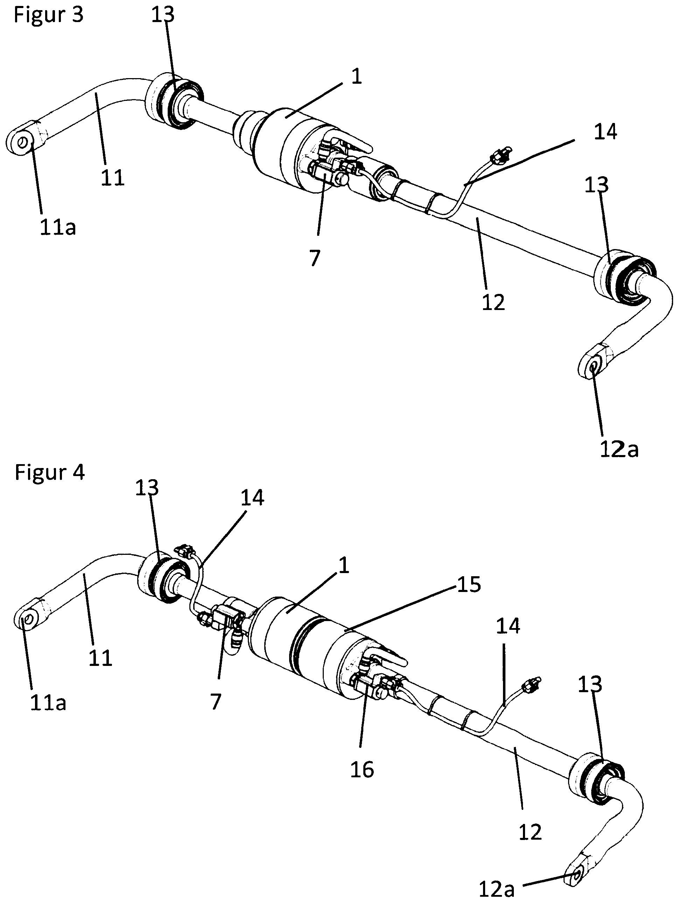

In **Figur 3** ist beispielshaft eine erfindungsgemäße Stabilisatoranordnung in einer dreidimensionalen aufgezeigt. Dabei ist der bereits in Figur 1 und Figur 2 zu erkennende Aktuator 1 aufgezeigt, der die beiden Stabilisatorhälften 11, 12 verdrehbar zueinander koppelt. Beide Stabilisatorhälften 11, 12 sind dabei mit einem nicht ersichtlichen Fahrzeugrad an ihren äußeren Enden 11a, 12a und über bestimmte Lagerungen 13 mit einem ebenfalls nicht eingezeichneten Fahrzeugaufbau verbunden. Das Ventil 7, welches die genannte fluidleitende Verbindung 6 zwischen den beiden Arbeitskammern 4, 5 öffnet, schließen oder nur teilweise schließen kann, wird dabei durch ein elektrisches Signal in einer elektrischen Leitung 14 angesteuert bzw. eingestellt. Die Ansteuerung kann dabei durch eine Steuereinheit in Abhängigkeit von äußeren Randbedingungen oder durch einen Betätigungsvorrichtung, welche beispielsweise vom Fahrer selbst geschaltet wird geschehen.

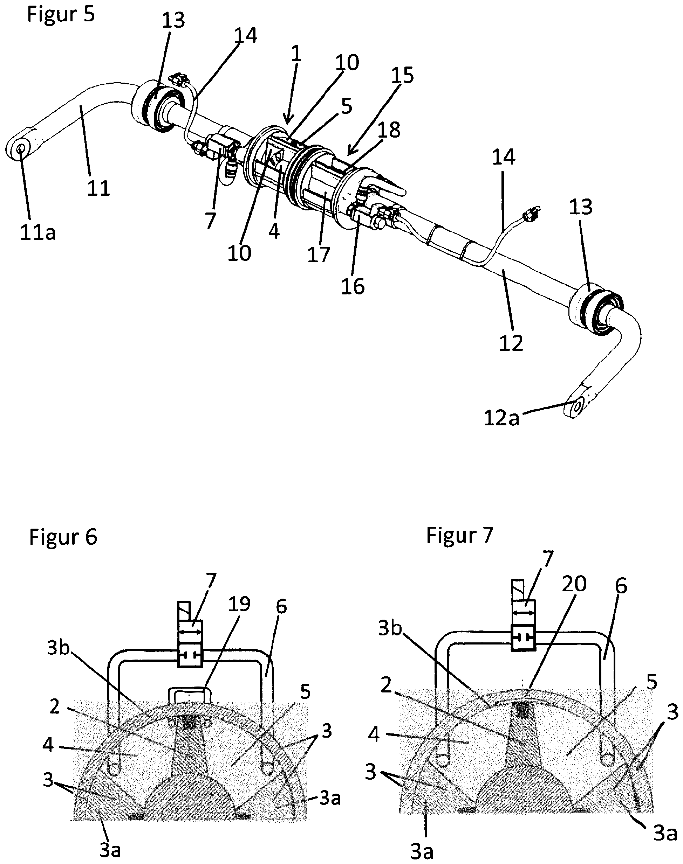

**Figur 4** zeigt eine weitere Ausführungsform der erfindungsgemäßen Stabilisatoranordnung. Dabei ist neben einem bereits erläuterten Aktuator 1 aus Figur 1 und Figur 2 ein weiterer zweiter Aktuator 15 in Reihe zu diesem angeordnet bzw. geschaltet. Im Gegensatz zu dem erläuterten Aktuator 1, ist im zweiten Aktuator 15, wie in **Figur 5** (in welcher das Gehäuse der Aktuatoren nicht aufgezeigt ist) zu erkennen, keine der erfindungsgemäßen Federelemente 10 angeordnet. Dabei ist eine Stabilisatorhälfte 11 fest mit dem Rotor 2 des ersten Aktuators 1 verbunden, während die andere Stabilisatorhälfte 12 fest mit einem Rotor 16 des zweiten Aktuators 15 verbunden ist. Die beiden Aktuatoren 1, 15 umfassen ein gemeinsames Gehäuse, welches seinerseits außerdem die Statoren 3 bzw. die Anschläge 3a umfasst. Die Statoren 3 bzw. das gemeinsame Gehäuse der beiden Aktuatoren 1, 15 ist mit keiner Stabilisatorhälfte 11, 12 fest verbunden.
Beide Aktuatoren besitzen ein Ventil 7, 16, welches eine fluidleitende Verbindung 6 zwischen den jeweiligen Arbeitskammern 4, 5, 17, 18 trennen, oder herstellen kann. Durch die gezeigte Reihenschaltung der beiden Aktuatoren 1, 15 sind insgesamt drei unterschiedliche Fahrmodi bzw. Stabilisatorsteifigkeiten bzw. Federraten schaltbar. Sind beispielsweise beide Ventile 7, 16 beider Aktuatoren 1, 15 geschlossen, so sind die beiden Stabilisatorhälften 11, 12 maximal miteinander gekoppelt und der Stabilisator wirkt wie ein einteiliger Drehstab. Diese vergleichsweise harte bzw. steife Anordnung des Stabilisators ist insbesondere bei Kurvenfahrten aus fahrdynamischen Gründen und Fahrsicherheitsgründen sinnvoll und wird deswegen als Sportmodus bezeichnet. Ist dagegen das Ventil 7 des ersten Aktuators 1 (also der Aktuator 1 mit den erfindungsgemäßen Federelementen 10) geöffnet und das Ventil 16 des zweiten Aktuators 15 geschlossen, so ist der Kraft-Weg-Verlauf des Stabilisators von der Federrate der Federelemente 10 abhängig. Das Fahrzeug kann durch die vergleichsmäßig weiche bzw. weniger steife Auslegung des Stabilisators dementsprechend komfortabel gefahren werden. Ist jedoch eine Entkoppelung der beiden Stabilisatorhälften 11, 12 voneinander erwünscht, was insbesondere auf unebenen Gelände sinnvoll ist, so kann der Stabilisator in einen Geländemodus geschaltet werden. Dazu wird das Ventil 16 des zweiten Aktuators 15 geöffnet und das Ventil 7 des ersten Aktuator 1 geschlossen. Das Hydraulikfluid kann so frei zwischen den beiden Arbeitskammern 17, 18 kommunizieren bzw. fließen, wobei die beiden Stabilisatorhälften 11, 12 nahezu entkoppelt sind.

Figur 6 und Figur 7 zeigen einen Ausschnitt eines schematisch dargestellten Querschnitts des Aktuators 1 mit beispielhaften Ausführungen eines Bypass-Kanals 19 bzw. einer Überström-Aussparung 20. Dazu ist ein zusätzlicher Verbindungs-Kanal 19 in unmittelbarer Nähe des sich in einer unbelasteten bzw. unbeweglichen Lage befindlichen Rotors 3 zwischen die beiden Arbeitskammern 4, 5 angeordnet. In "unbelasteter Lage" bedeutet in diesem Falle, dass sich der Stabilisator in der Nulllage bzw. in Konstruktionslage befindet. Genauso ist es möglich, wie in Figur 7 dargestellt, anstatt einem Verbindungs-Kanal 19 eine schmale Überström-Aussparung 20 am Innendurchmesser 3b des Stators 3 in unmittelbarer Nähe des sich in Ruhe befindlichen Rotors 2 anzuordnen. Eine Aussparung 20 bzw. ein derartiger Kanal 19 ermöglicht bei hochfrequenten Belastungen bzw. Verdrehungen mit kleinen Amplituden, wie sie üblicherweise bei Schlechtwegstrecken oder bei Überfahrt über Kopfsteinpflastern auftreten, auch in der steifen bzw. harten Schaltung bzw. Stellung einen kleinen Drehwinkel des Rotors und somit einen verbesserten Abrollkomfort bzw. Restkomfort. Je nach vorherrschendem Verdrehwinkel des Rotors 2, bis zu welchem ein Fluidaustausch innerhalb des Kanals 19 bzw. der Überströmaussparung 20 möglich ist und damit je nach Lage des Eingangs bzw. Ausgangs des Hydraulikmediums im Kanal 19 bzw. in der Überstrom-Aussparung 20 auf dem Innendurchmesser des Stators 3b, variiert der genannte Restkomfort.

### Bezugszeichenliste:

- 1: Aktuator
- 2: Rotor
- 3: Stator
- 3a: Anschlag
- 3b: Innendurchmesser des Stators
- 4: Arbeitskammer
- 5: Arbeitskammer
- 6: Fluidleitende Verbindung
- 7: Ventil
- 8: Arbeitskammer
- 9: Arbeitskammer
- 10: Federelement
- 11: Stabilisatorhälfte
- 11a: Ende der Stabilisatorhälfte
- 12a: Ende der Stabilisatorhälfte
- 12: Stabilisatorhälfte
- 13: Lagerung
- 14: Leitung
- 15: Zweiter Aktuator
- 16: Ventil
- 17: Arbeitskammer
- 18: Arbeitskammer
- 19: Kanal
- 20: Überström-Aussparung

## Patentansprüche

1. Schaltbare Stabilisatoranordnung eines Fahrzeug, insbesondere zur Wankstabilisierung, umfassend
▪ eine erste und eine zweite jeweils mit einem Rad des Fahrzeuges gekoppelte Stabilisatorhälfte (11, 12),
▪ wobei die erste und die zweite Stabilisatorhälfte (11, 12) um deren Längsachse gegeneinander verdrehbar mittels einem hydraulischen semiaktiven Aktuator (1) gekoppelt sind und
▪ wobei der Aktuator (1) mindestens zwei mit einem Hydraulikmedium befüllte Arbeitskammern (4, 5) aufweist sowie
▪ mindestens eine fluidleitende Verbindung (6) zwischen den mindestens zwei Arbeitskammern (4, 5), deren Durchtrittsquerschnitt veränderbar ist
**dadurch gekennzeichnet, dass**
die Arbeitskammern (4, 5) des Aktuators (1) ihrerseits nicht elastisch verformbar sind, sondern in den mindestens zwei Arbeitskammern (4, 5) des Aktuators (1) und/oder in mindestens zwei weiteren Arbeitskammern (8, 9) des Aktuators (1) ein Federelement (10) angeordnet ist, welches zwischen einem Rotor (2) und einem Stator (3) des Aktuators (1) abgestützt ist.

2. Stabilisatoranordnung nach Anspruch 1, wobei die erste Stabilisatorhälfte mit dem Rotor des Aktuators und die zweite Stabilisatorhälfte mit dem Stator des Aktuators drehfest verbunden ist.

3. Stabilisatoranordnung nach Anspruch 1 oder 2, wobei mindestens ein weiterer zweiter Aktuator in Reihe mit dem in Anspruch 1 genannten Aktuator geschaltet ist.

4. Stabilisatoranordnung nach einem der vorangegangenen Ansprüche, wobei mindestens ein weiterer Aktuator (15) in Reihe mit dem Aktuator (1) nach Anspruch 1 und/oder mit dem zweiten Aktuator geschalten ist und wie dieser ausgebildet ist, wobei der weitere Aktuator (15) kein Federelement (10) umfasst und als dritter Aktuator bezeichnet ist.

5. Stabilisatoranordnung nach einem der vorangegangenen Ansprüche 3 - 4, wobei die Federelemente (10) in den unterschiedlichen Aktuatoren unterschiedliche Federraten aufweisen.

6. Stabilisatoranordnung nach einem der vorangegangenen Ansprüche, wobei ein den Durchtrittsquerschnitt der Verbindung (6) veränderndes Stellglied (7) mindestens eines Aktuators mit einer Steuereinheit gekoppelt ist und in Abhängigkeit von Randbedingungen offen, geschlossen oder teilweise geschlossen ist.

7. Stabilisatoranordnung nach einem der vorangegangenen Ansprüche, wobei ein den Durchtrittsquerschnitt der Verbindung veränderndes Stellglied mindestens eines Aktuators mit einer externen Betätigungsvorrichtung gekoppelt ist und in Abhängigkeit einer Betätigung der externen Betätigungsvorrichtung offen, geschlossen oder teilweise geschlossen ist.

8. Stabilisatoranordnung nach einem der vorangegangenen Ansprüche, wobei das Stellglied in einem unbestromten Zustand geschlossen ist.

9. Stabilisatoranordnung nach einem der vorangegangenen Ansprüche, wobei mindestens ein Aktuator zwischen mindestens zwei Arbeitskammern des Aktuators eine zweite fluidleitende Verbindung (19, 20) umfasst.

10. Stabilisatoranordnung nach Anspruch 9, wobei ein den Durchtrittsquerschnitt der zweiten fluidleitenden Verbindung (19, 20) veränderndes Stellglied mindestens eines Aktuators mit einer Steuereinheit gekoppelt ist und in Abhängigkeit von Randbedingungen offen, geschlossen oder teilweise geschlossen ist.

## Claims

1. A switchable stabiliser assembly of a vehicle, in particular for roll stabilisation, comprising
▪ a first and a second stabiliser half (11, 12), each of which is coupled to a wheel of the vehicle,
▪ the first and second stabiliser halves (11, 12) being coupled rotatably relative to each other about their longitudinal axes by means of a hydraulic, semi-active actuator (1), and
▪ the actuator (1) having at least two working chambers (4, 5) filled with a hydraulic medium, as well as
▪ at least one fluidic connection (6) of variable flow cross-section between the at least two working chambers (4, 5),
**characterised in that**
the working chambers (4, 5) of the actuator (1) are not elastically deformable, and instead a spring element (10) is arranged in the at least two working chambers (4, 5) of the actuator (1) and/or in at least two further working chambers (8, 9) of the actuator (1) and is supported between a rotor (2) and a stator (3) of the actuator (1).

2. A stabiliser assembly according to claim 1, wherein the first stabiliser half is connected to the rotor of the actuator in a manner preventing relative rotation and the second stabiliser half is connected to the stator of the actuator in a manner preventing relative rotation.

3. A stabiliser assembly according to claim 1 or 2, wherein at least one further second actuator is connected in series with the actuator mentioned in claim 1.

4. A stabiliser assembly according to one of the preceding claims, wherein at least one further actuator (15) is connected in series with the actuator (1) according to claim 1 and/or with the second actuator and is formed similarly thereto, the further actuator (15) having no spring element (10) and being referred to as a third actuator.

5. A stabiliser assembly according to one of preceding claims 3-4, wherein the spring elements (10) have different spring rates in the different actuators.

6. A stabiliser assembly according to one of the preceding claims, wherein a servo component (7) of at least one actuator, which component varies the flow cross-section of the connection (6), is coupled to a control unit and is open, closed, or partially closed depending on boundary conditions.

7. A stabiliser assembly according to one of the preceding claims, wherein a servo component of at least one actuator, which component varies the flow cross-section of the connection, is coupled to an external actuation device and is open, closed, or partially closed depending on an actuation of the external actuation device.

8. A stabiliser assembly according to one of the preceding claims, wherein the servo component is closed in a deenergised state.

9. A stabiliser assembly according to one of the preceding claims, wherein at least one actuator comprises a second fluidic connection (19, 20) between at least two working chambers of the actuator.

10. A stabiliser assembly according to claim 9, wherein a servo component of at least one actuator, which component varies the flow cross-section of the second fluidic connection (19, 20), is coupled to a control unit and is open, closed or partially closed depending on boundary conditions.

## Revendications

1. Agencement de stabilisation commutable d'un véhicule destiné en particulier à la stabilisation du roulis comprenant :
- une première moitié de stabilisateur et une seconde moitié de stabilisateur (11, 12) respectivement couplées à une roue du véhicule,
- la première moitié du stabilisateur et la seconde moitié du stabilisateur (11, 12) étant couplées au moyen d'un actionneur hydraulique (1) semi-actif pour permettre de faire tourner leur axe longitudinal l'un par rapport à l'autre,
- l'actionneur (1) comprenant au moins deux chambres de travail (4, 5) remplies d'un fluide hydraulique ainsi qu'
- au moins une liaison fluidique (6) entre les deux chambres de travail (4, 5) dont la section de passage peut être modifiée,
**caractérisé en ce que**
les chambres de travail (4, 5) de l'actionneur (1) ne sont pas déformables élastiquement, mais, dans les deux chambres de travail (4, 5) de l'actionneur (1) et/ou dans au moins deux autres chambres de travail (8, 9) de l'actionneur (1) est installé un élément de ressort (10) qui s'appuie entre le rotor (2) et le stator (3) de l'actionneur (1).

2. Agencement de stabilisateur conforme à la revendication 1,
dans lequel la première moitié du stabilisateur est reliée au rotor de l'actionneur et la seconde moitié du stabilisateur est reliée au stator de l'actionneur.

3. Agencement de stabilisateur conforme à la revendication 1 ou 2,
dans lequel un second actionneur est monté en série avec l'actionneur mentionné dans la revendication 1.

4. Agencement de stabilisateur conforme à l'une des revendications précédentes,
dans lequel au moins un autre actionneur (15) est monté en série avec l'actionneur (1) conforme à la revendication 1 et/ou avec le second actionneur, et est réalisé de manière similaire, l'autre actionneur (15) ne comportant pas d'élément de ressort (10) et étant désigné comme troisième actionneur.

5. Agencement de stabilisateur conforme à l'une des revendications précédentes 3 et 4,
dans lequel les éléments de ressort (10) installés dans les différents actionneurs ont des raideurs différentes.

6. Agencement de stabilisateur conforme à l'une des revendications précédentes,
dans lequel un organe de réglage (7) modifiant la section de passage de la liaison (6) d'au moins un actionneur est couplé à une unité de commande et est ouvert, fermé ou partiellement fermé en fonction de conditions aux limites.

7. Agencement de stabilisateur conforme à l'une des revendications précédentes,
dans lequel un organe de réglage d'au moins un actionneur, modifiant la section de passage de la liaison est couplé à un dispositif de commande externe, et est ouvert fermé ou partiellement fermé en fonction d'une commande du dispositif de commande externe.

8. Agencement de stabilisateur conforme à l'une des revendications précédentes,
dans lequel l'organe de réglage est fermé dans un état non alimenté.

9. Agencement de stabilisateur conforme à l'une des revendications précédentes,
dans lequel au moins un actionneur comporte une seconde liaison fluidique (19, 20) entre au moins deux chambres de travail de celui-ci.

10. Agencement de stabilisateur conforme à la revendication 9,
dans lequel un organe de réglage modifiant la section de passage de la seconde liaison fluidique (19, 20) d'au moins un actionneur est couplé à une unité de commande, et est ouvert fermé ou partiellement fermé en fonction de conditions aux limites.
